# EUROPÄISCHE PATENTSCHRIFT

(11) **EP 2 527 867 B1**
(45) Veröffentlichungstag und Bekanntmachung des Hinweises auf die Patenterteilung: **24.01.2018**
(21) Anmeldenummer: 12164544.4
(22) Anmeldetag: 18.04.2012
(51) Int. Cl.: G01S 7/481, G01S 17/08, G01S 7/48

(54) **Messeinrichtung zur Distanzmessung**
Measuring device for distance measuring
Dispositif de mesure de la distance

(30) Priorität: 26.05.2011 DE 102011076491
(43) Veröffentlichungstag der Anmeldung: 28.11.2012
(73) Patentinhaber: HILTI Aktiengesellschaft, 9494 Schaan (LI); JENOPTIK Advanced Systems GmbH, 22880 Wedel (DE)
(72) Erfinder: Gogolla, Torsten, 9494 Schaan (LI); Tiefenthaler, Stefan, 6812 Meiningen (AT); Steffen, Roman, 9445 Rebstein (CH); Seifert, Helmut, 07616 Serba (DE); Schusser, Gero, 07745 Jena (DE)
(74) Vertreter: Hilti Aktiengesellschaft Corporate Intellectual Property

(56) Entgegenhaltungen:
- DE-A1- 10 244 638
- GB-A- 2 334 172
- US-A- 4 154 529
- US-A1- 2006 285 103
- US-A1- 2010 302 527

## Beschreibung

Die vorliegende Erfindung betrifft eine Messeinrichtung zur Messung einer Distanz zwischen einer Referenzmarke und einem Zielobjekt gemäß dem Oberbegriff des Anspruchs 1.

Messeinrichtungen für Laserdistanzmesssysteme bestehen aus einer als Strahlquelle ausgebildeten elektro-optischen Komponente, einer als Detektor ausgebildeten weiteren elektro-optischen Komponente und einem Strahlformungssystem mit einer Sendeoptik und einer Empfangsoptik. Die Strahlquelle und die Sendeoptik werden als Sendeeinrichtung und der Detektor und die Empfangsoptik als Empfangseinrichtung bezeichnet. Die Strahlquelle sendet entlang einer optischen Achse einen Laserstrahl aus, der von der Sendeoptik auf das Zielobjekt gerichtet wird. Ein vom Zielobjekt reflektierter und/oder gestreuter Empfangsstrahl wird von der Empfangsoptik geformt und entlang einer optischen Achse auf den Detektor gerichtet. Messeinrichtungen werden in paraaxiale Anordnungen, bei denen die optischen Achsen der Sende- und Empfangseinrichtungen parallel versetzt verlaufen, und koaxiale Anordnungen, bei denen die optischen Achsen der Sende- und Empfangseinrichtungen übereinander liegen und mit Hilfe einer Strahlteilungsoptik getrennt werden, unterteilt. Bei koaxialen Anordnungen sind die Sendeoptik und die Empfangsoptik in eine gemeinsame Strahlformungsoptik, die den Laserstrahl und den Empfangsstrahl formt, integriert.

EP 1 351 070 A1 offenbart eine bekannte Messeinrichtung mit einer paraaxialen Anordnung der Sende- und Empfangseinrichtungen. Die Strahlquelle, die Sendeoptik und die Empfangsoptik sind an einem in sich starren Optikträger befestigt. Der Detektor ist an einer Leiterplatte befestigt, die über eine Schraubverbindung mechanisch starr mit dem Optikträger verbunden ist. Der Optikträger umfasst drei Aufnahmen zur Befestigung der Strahlquelle, der Sendeoptik und der Empfangsoptik. Die Strahlquelle und die Empfangsoptik werden auf Anschlag in die Aufnahmen im Optikträger eingesetzt und ggf. mit einer Klebverbindung im Optikträger fixiert. Die Sendeoptik ist im Optikträger entlang ihrer optischen Achse verstellbar und wird bei aktivierter Strahlquelle justiert und in der justierten Position mit dem Optikträger verklebt. Der Detektor wird bei aktivierter Strahlquelle mit einem Manipulator relativ zur Leiterplatte in allen drei Raumrichtungen, d.h. in Richtung seiner optischen Achse und in der Ebene senkrecht zur optischen Achse, verschoben, bis der Empfangsstrahl auf einen vorbestimmten Bereich des Detektors auftrifft. Anschließend wird der Detektor in der justierten Position auf der Leiterplatte mit einer Lötverbindung fixiert. Justagetoleranzen werden durch Justagespalte mit Lötbrücken und vergrößerten Kontaktflächen ausgeglichen.

Bei Messeinrichtungen mit einer paraaxialen Anordnung der Sende- und Empfangseinrichtungen ist nachteilig, dass die Sendeoptik und die Empfangsoptik räumlich nebeneinander angeordnet sind und die beiden Optiken in einer Ebene senkrecht zu den optischen Achsen einen höheren Platzbedarf als bei einer koaxialen Anordnung aufweisen. Außerdem führt ein Parallelversatz zwischen den optischen Achsen der Sende- und Empfangseinrichtungen, der als Parallaxe bezeichnet wird, bei kurzen Entfernungen zum Zielobjekt dazu, dass die Abbildung des Empfangsstrahls auf die aktive Fläche des Detektors mit abnehmender Entfernung von der optischen Achse der Empfangsoptik verschoben wird und eine Aufweitung des Strahlquerschnittes in der Detektorebene erfährt. Aufgrund des Parallelversatzes zwischen den optischen Achsen der Sende- und Empfangseinrichtungen ist bei Messeinrichtungen mit paraaxialer Anordnung der Sende- und Empfangseinrichtungen eine aufwändige multifokale Empfangsoptik oder ein segmentierter Detektor mit verhältnismäßig großer Längsausdehnung notwendig. Durch die multifokale Empfangsoptik wird gewährleistet, dass Licht aus dem Nahbereich durch eine partiell stärkere Brechkraft der Empfangsoptik stärker gebrochen wird als Licht aus dem Fernbereich und trotz der Verschiebung des Empfangsstrahls den Detektor zumindest teilweise erreicht. Ein segmentierter Detektor mit großer Längsausdehnung führt dazu, dass auch ein verschobener Empfangsstrahl noch detektiert werden kann.

Messeinrichtungen mit einer koaxialen Anordnung der Sende- und Empfangseinrichtungen besitzen gegenüber paraaxialen Anordnungen den Vorteil der Parallaxefreiheit. Nachteilig ist allerdings, dass ein optisches Übersprechen von der Strahlquelle zum Detektor erfolgt, da derselbe optische Kanal für den Sendepfad und den Empfangspfad verwendet wird. Optisches Übersprechen führt zu einem zyklischen Distanzmessfehler, d.h. einem Messfehler, der sich periodisch mit der Distanz ändert. Um die Probleme des optischen Übersprechens und einer übermäßigen Lichtstreuung an Luftpartikeln oder Aerosolen im Nahbereich zu reduzieren, schlägt die DE 203 80 221 U1 eine integrierte optische Komponente vor, die den Laserstrahl und den Empfangsstrahl so formt, dass sie sich umschließen, aber im Nahbereich nicht in hohem Maß überschneiden. Nachteilig ist, dass die optische Komponente als Linse mit einem großen Durchmesser und einer großen Brennweite ausgebildet ist, was wiederum einen Detektor mit einer großen aktiven Fläche notwendig macht. Insgesamt ist der Aufbau der DE 203 80 221 U1 nicht geeignet, eine kostengünstige und kompakte Messeinrichtung für ein Laserdistanzmesssystem aufzubauen.

US 2010/0302527 A offenbart eine Messeinrichtung zur Messung einer Distanz zwischen einer Referenzmarke und einem Zielobjekt. Die Messeinrichtung umfasst eine Strahlquelle, die als elektro-optische Komponente ausgebildet ist und einen Laserstrahl aussendet, einen Detektor, der als weitere elektro-optische Komponente ausgebildet ist und einen vom Zielobjekt reflektierten und/oder gestreuten Empfangsstrahl empfängt, eine Strahlformungsoptik, die den Laserstrahl und den Empfangsstrahl formt, eine Strahlteilungsoptik, die den Empfangsstrahl umlenkt, und einen Optikträger mit einer ersten Aufnahme zur Befestigung einer ersten der elektro-optischen Komponenten (Strahlquelle oder Detektor) und einer zweiten Aufnahme zur Befestigung der Strahlformungsoptik.

US 4,154,529 A offenbart eine Messeinrichtung für ein Lasermesssystem zur Geschwindigkeits- und Grössenmessung von bewegten Partikeln. Die Messeinrichtung umfasst eine Strahlquelle, die einen Laserstrahl aussendet, einen Detektor, der einen Empfangsstrahl empfängt, eine Strahlformungsoptik, die den Laserstrahl und den Empfangsstrahl formt, eine Strahlteilungsoptik und einen mehrteiligen Optikträger mit einer ersten Aufnahme für die Strahlquelle und einer zweiten Aufnahme für die Strahlformungsoptik. Im Strahlengang des Empfangsstrahls ist zwischen der Strahlteilungsoptik und dem Detektor eine weitere Strahlformungsoptik angeordnet, die ausschliesslich den Empfangsstrahl formt. Der Optikträger umfasst einen ersten und zweiten Teilträger, die miteinander verschraubt sind. Die Strahlquelle ist in eine erste Gewindeaufnahme des ersten Teilträgers eingeschraubt. Der erste Teilträger weist eine zweite und dritte Gewindeaufnahme für die Strahlformungsoptiken auf. Die Strahlformungsoptiken sind jeweils in einem Optikhalter befestigt, die in die zweite und dritte Gewindeaufnahme des ersten Teilträgers eingeschraubt werden. Der Optikhalter für die Strahlformungsoptik, die Laser- und Empfangsstrahl formt, ist zusätzlich mit dem zweiten Teilträger verschraubt. Der mehrteilige Optikträger weist den Nachteil auf, dass sich die verschiedenen Teilträger und Optikhalter für die Strahlformungsoptiken unter Temperatureinfluss ungleichmäßig verändern können. Die ungleichmäßige Ausdehnung der Teilträger oder Optikhalter erzeugt Ungenauigkeiten in einer justierten Messeinrichtung.

DE 102 44 638 A1 offenbart eine Messeinrichtung mit einer Strahlquelle, die einen Laserstrahl aussendet, einem Detektor, der einen reflektierten und/oder gestreuten Empfangsstrahl empfängt, einer Strahlformungsoptik, die eine Sendeoptik zur Strahlformung des Laserstrahls und eine Empfangsoptik zur Strahlformung des Empfangsstrahls umfasst, und einem Optikträger. Der Optikträger weist eine erste Aufnahme zur Befestigung der Strahlquelle, eine zweite Aufnahme zur Befestigung der Sendeoptik und eine dritte Aufnahme zur Befestigung der Empfangsoptik auf. Nachteilig ist, dass der Optikträger mehrteilig ausgebildet ist. Der mehrteilige Optikträger weist den Nachteil auf, dass sich die verschiedenen Komponenten unter Temperatureinfluss ungleichmäßig verändern können. Die ungleichmäßige Ausdehnung der Komponenten erzeugt Ungenauigkeiten in einer justierten Messeinrichtung.

Wünschenswert wäre es, eine Messeinrichtung hinsichtlich der oben erläuterten Nachteile zu verbessern. Die Aufgabe der vorliegenden Erfindung besteht darin, eine kostengünstige und kompakte Messeinrichtung für ein Laserdistanzmesssystem mit einer hohen Messgenauigkeit bereitzustellen, wobei die Messeinrichtung im Nahbereich und Fernbereich einsetzbar sein soll.

Diese Aufgabe wird bei der eingangs genannten Messeinrichtung erfindungsgemäß durch die Merkmale des unabhängigen Anspruchs 1 gelöst. Vorteilhafte Weiterbildungen der Erfindung sind in den abhängigen Ansprüchen angegeben.

Erfindungsgemäß ist der Optikträger mit der ersten Aufnahme zur Befestigung einer ersten der elektro-optischen Komponenten und der zweiten Aufnahme zur Befestigung der Strahlformungsoptik monolithisch ausgebildet, wobei die erste der elektro-optischen Komponenten und die Strahlformungsoptik zumindest während der Justierung der Messeinrichtung in ihren Aufnahmen ausschließlich in Richtung der zugeordneten optischen Achsen verstellbar sind. Als elektro-optische Komponenten werden optische Komponenten bezeichnet, die zum Betrieb mit elektrischem Strom versorgt werden müssen und elektrischen Strom in Licht bzw. Licht in elektrischen Strom umwandeln, wie beispielsweise eine Strahlquelle oder ein Detektor.

Ein monolithischer Optikträger ist aus einem Material ausgebildet und ist nicht aus mehreren Einzelteilen zusammengesetzt. Monolithische Optikträger weisen keine Verbindungszone zwischen einem ersten und zweiten Verbindungspartner auf. Ein monolithischer Optikträger weist gegenüber einem mehrteiligen Optikträger den Vorteil auf, dass sich der Optikträger unter Temperatureinfluss gleichmäßig verändert, es gibt keine Bereiche im Optikträger, die sich aufgrund verschiedener Materialeigenschaften temperaturabhängig unterschiedlich verändern. Durch den monolithischen Optikträger wird die Stabilität der Messeinrichtung erhöht. Die optischen Komponenten können genau zueinander justiert werden und die justierten Positionen bleiben unter verschiedenen Umgebungsbedingungen erhalten. Je genauer und stabiler die optischen Komponenten zueinander ausgerichtet sind, umso kleiner können die aktive Fläche des Detektors, die für eine hohe Messleistung notwendigen Abmessungen der Empfangsoptik und die gesamte Messeinrichtung ausgebildet sein. Durch eine kleine aktive Fläche des Detektors wird wenig störendes Fremd- bzw. Sonnenlicht detektiert. Durch Reduzierung der Brennweite der Empfangsoptik wird dagegen aufgrund des größeren Öffnungswinkels mehr störendes Fremd- bzw. Sonnenlicht erfasst. Eine kleine aktive Fläche des Detektors kompensiert den Effekt einer verkleinerten Brennweite der Empfangsoptik zumindest teilweise.

Durch die Verstellbarkeit der elektro-optischen Komponente und der Strahlformungsoptik relativ zum Optikträger in einer Verstellrichtung, die im Wesentlichen parallel zur jeweils zugeordneten optischen Achse verläuft, wird zwischen einer Leiterplatte und der zweiten der elektro-optischen Komponenten ein Spalt vermieden, der durch eine Lötbrücke überbrückt werden müsste. Dass die Bildung einer Lötbrücke vermieden wird, erhöht die Zuverlässigkeit der mechanischen Befestigung der elektro-optischen Komponenten und verbessert die Hochfrequenz-Eigenschaften der Messeinrichtung.

In einer bevorzugten Weiterbildung der Erfindung ist die zweite der elektro-optischen Komponenten auf einer Leiterplatte angeordnet, wobei die Leiterplatte über eine Verbindungseinrichtung mit dem Optikträger verbindbar ist. Die zweite der elektro-optischen Komponenten ist in einer Ebene im Wesentlichen senkrecht zur optischen Achse des Laser- oder Empfangsstrahls, der der zweiten der elektro-optischen Komponenten zugeordnet ist, einstellbar und in der justierten Position fixierbar. Die Ebene, in der die zweite der elektro-optischen Komponenten einstellbar ist, verläuft im Wesentlichen senkrecht zur zugeordneten optischen Achse. Eine geringe Abweichung vom rechten Winkel ist tolerierbar, solange die resultierende Abstandsänderung zur Strahlformungsoptik einen zulässigen Wert nicht überschreitet. Bei einem Justageweg von 500 µm in der Ebene senkrecht zum Empfangsstrahl (Detektor als zweite der elektro-optischen Komponenten) und einer Winkelabweichung von 1° ergibt sich beispielsweise eine Abstandsänderung zur Strahlformungsoptik von ca. 10 µm. Diese Abstandsänderung führt zu einer Verschiebung der Fokuslage, die während der Justierung der Messeinrichtung unerwünscht ist. Die Winkelabweichung darf lediglich in der Größenordnung liegen, dass die resultierende Verschiebung der Fokuslage während der Justierung der Messeinrichtung noch zulässig ist. Die im Optikträger angeordneten optischen und elektro-optischen Komponenten sind in Richtung der jeweils zugeordneten optischen Achsen einstellbar, d.h. die Verstellrichtungen der Komponenten verlaufen im Wesentlichen parallel zu den optischen Achsen. Abweichungen von der Parallelität, die beispielsweise durch Fertigungstoleranzen des Optikträgers entstehen, sind zulässig.

Bevorzugt weist die zweite Aufnahme zur Befestigung der Strahlformungsoptik eine erste Auflagefläche, eine zweite Auflagefläche und eine Klemmfläche auf, wobei die Auflage- und Klemmflächen in den Optikträger integriert sind. Als Auflagefläche wird ein Auflagebereich definiert, der durch die Schwerkraft der Strahlformungsoptik wirkt, und als Klemmfläche ein Auflagebereich, der nicht durch die Schwerkraft der Strahlformungsoptik, sondern durch eine zusätzliche Kraft wirkt. Durch die Auflage- und Klemmflächen wird sichergestellt, dass die Strahlformungsoptik bei der Justierung präzise verstellbar und in der justierten Position fixierbar ist. Optional kann die Strahlformungsoptik zusätzlich durch eine Klebverbindung mit dem Optikträger verbunden werden. Durch die zusätzliche Klebverbindung wird sichergestellt, dass bei sehr starker mechanischer Belastung, wie z.B. ein freier Fall der Messeinrichtung, die justierte Position erhalten bleibt.

Besonders bevorzugt weist der Optikträger ein Federelement auf, das die Klemmfläche für die Strahlformungsoptik bildet. Durch die Integration des Federelementes mit der Klemmfläche in den Optikträger wird sichergestellt, dass sich die zweite Aufnahme für die Strahlformungsoptik unter Temperatureinwirkung gleichmäßig verändert und eine gleichmäßige Krafteinleitung in die Strahlformungsoptik sichergestellt ist.

Die zweite Aufnahme weist bevorzugt mindestens eine Führungsfläche auf, die in den Optikträger integriert ist. Durch die zusätzlichen Führungsflächen wird die Ausrichtung der Strahlformungsoptik verbessert und das Risiko, dass die Strahlformungsoptik verkantet in die zweite Aufnahme des Optikträgers eingeführt wird, ist reduziert. Die Führungsflächen stellen sicher, dass die Strahlformungsoptik exakt im Strahlengang des Laserstrahls ausgerichtet ist. Je genauer und stabiler die optischen Komponenten zueinander ausgerichtet sind, umso kleiner können die aktive Fläche des Detektors, die Brennweite der Empfangsoptik und damit die Messeinrichtung ausgebildet sein.

In einer bevorzugten Ausführungsform weist der Optikträger eine dritte Aufnahme zur Befestigung der Strahlteilungsoptik mit drei Auflagebereichen auf, wobei die Auflagebereiche in den Optikträger integriert sind. Die Strahlteilungsoptik, die den Laserstrahl oder den Empfangsstrahl zumindest teilweise umlenkt, ist bei einer koaxialen Anordnung notwendig, um den Laserstrahl und den Empfangsstrahl räumlich voneinander zu trennen. Die Strahlteilungsoptik ist beispielsweise als Polarisationsstrahlteiler ausgebildet.

Besonders bevorzugt sind der erste und zweite Auflagebereich als keilförmige Nuten und der dritte Auflagebereich als ebene Auflagefläche ausgebildet und die Strahlteilungsoptik ist mit Hilfe eines Klemmelementes an der Auflagefläche geklemmt. Das Klemmelement ist beispielsweise als Federelement ausgebildet und so angeordnet, dass die Federkraft möglichst über der ebenen Auflagefläche wirkt. Durch die Auflage der Strahlteilungsoptik in den beiden keilförmigen Nuten wird gewährleistet, dass die jeweiligen Andruckkräfte und die Auflagegegenkräfte weitgehend gegensinnig auf die Strahlteilungsoptik wirken und eine Wölbung der Strahlteilungsoptik vermieden wird. Je genauer und stabiler die Strahlteilungsoptik zu den anderen optischen Komponenten ausgerichtet ist, umso kleiner können die aktive Fläche des Detektors, die Brennweite der Empfangsoptik und damit die Messeinrichtung ausgebildet sein.

In einer alternativen bevorzugten Ausführungsform ist die Strahlteilungsoptik als Lochspiegel bestehend aus einer Öffnung und einer reflektierenden Beschichtung ausgebildet, wobei die Öffnung in den Optikträger integriert ist und die reflektierende Beschichtung die Öffnung umgibt. Die reflektierende Beschichtung kann durch Oberflächenbeschichtungsverfahren direkt auf eine Fläche des Optikträgers aufgebracht werden. Durch diese Ausbildung der Strahlteilungsoptik kann auf ein Klemmelement, das zur Fixierung eines Polarisationsstrahlteilers notwendig ist, verzichtet werden. Da die Fläche, auf der die reflektierende Beschichtung aufgebracht ist, in den Optikträger integriert ist, ist sichergestellt, dass sich die Strahlteilungsoptik und der Optikträger unter Temperatureinwirkung gleichmäßig verändern und ein Verkippen der Strahlteilungsoptik verhindert wird. Die Stabilität der Messeinrichtung wird erhöht und der Montage- und Justageaufwand der Strahlteilungsoptik gleichzeitig reduziert. Eine Reduzierung des Montage- und Justageaufwands führt zu einer Reduzierung der Herstellkosten der Messeinrichtung.

Bevorzugt ist im Strahlengang des Laserstrahls zwischen der Strahlquelle und der Strahlteilungsoptik eine Blende angeordnet, die in den Optikträger integriert ist. Dabei ist die Strahlteilungsoptik beispielsweise als Polarisationsstrahlteiler, als Lochspiegel oder sonstige geeignete Strahlteilungsoptik ausgebildet. Die Blende dient dazu, den Öffnungswinkel bzw. die numerische Apertur der Strahlquelle zu begrenzen und die Geometrie des Laserstrahls an die Strahlteilungsoptik und die Strahlformungsoptik anzupassen. Zwischen der Strahlquelle und der Strahlteilungsoptik ist bevorzugt alternativ oder zusätzlich zur Blende eine Lichtfalle angeordnet, die in den Optikträger integriert ist. Die Lichtfalle dient dazu, auftreffendes Licht der Strahlquelle zu absorbieren und unerwünschte Reflektionen zu verhindern. Durch die Blende und/oder die Lichtfalle werden optisches und elektrisches Übersprechen von der Strahlquelle zum Detektor reduziert. Dadurch, dass die Blende und/oder die Strahlfalle in den Optikträger integriert sind, reduziert sich der Justageaufwand. Die Justage der Blende und der Lichtfalle relativ zur Strahlquelle erfolgt bereits bei der Herstellung der Aufnahmen für die optischen Komponenten im Optikträger.

In einer bevorzugten Ausführung ist der Optikträger aus einem metallischen Material ausgebildet. Metallische Optikträger führen zu einer elektrischen Abschirmung zwischen den elektro-optischen Komponenten und reduzieren elektrisches Übersprechen zwischen einer Strahlquelle und einem Detektor.

In einer bevorzugten Ausführung ist der Optikträger als Druckgussteil ausgebildet. Die Ausbildung als Druckgussteil hat den Vorteil, dass komplexe Geometrien mit einer hohen Genauigkeit erzeugt werden können. Druckgussteile besitzen glatte, saubere Flächen und Kanten. Außerdem erlauben Druckgussverfahren speziell mit Zink die Herstellung von geringeren Wandstärken im Vergleich zu Herstellungsverfahren, wie beispielsweise Spritzguss oder Druckguss mit anderen Metallen, wie z.B. Aluminium. Durch die Herstellung als Druckgussteil können komplexe Funktionen, wie Federelemente oder Bohrungen, ohne aufwändige Nachbearbeitung in den Optikträger integriert werden. Dadurch reduzieren sich die Kosten für die Herstellung des Optikträgers und der Aufbau einer kostengünstigen Messeinrichtung wird möglich.

Der Optikträger ist besonders bevorzugt als Druckgussteil aus Zink oder Zinklegierungen, die unter dem Begriff "Zink" zusammengefasst werden, ausgebildet. Zink lässt sich in Druckgussverfahren mit einer hohen Genauigkeit verarbeiten und besitzt außerdem eine hohe Temperaturstabilität, so dass Temperaturschwankungen, denen Laserdistanzmesssysteme häufig ausgesetzt sind, nur einen geringen Einfluss auf den Justagezustand und damit auf die Messeigenschaften der Laserdistanzmesssysteme ausüben. Bei Zink ist eine Vielzahl von Oberflächenbeschichtungen möglich, so dass reflektierende oder absorbierende Beschichtungen direkt auf dem Optikträger aufgebracht werden können. Zink weist außerdem gute elektrische Abschirmungseigenschaften auf.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: ein erfindungsgemäßes Laserdistanzmesssystem mit einer Messeinrichtung;
- Fig. 2: eine Messeinrichtung bestehend aus einer Strahlquelle, die in einen monolithischen Optikträger eingesetzt ist und einen Laserstrahl aussendet, einem Detektor, der auf einer dem Optikträger zugewandten Vorderseite einer Leiterplatte angeordnet ist und einen Empfangsstrahl empfängt, und einer Strahlteilungsoptik zur Trennung des Laser- und Empfangsstrahls;
- Fign. 3A, B: den monolithischen Optikträger der Fig. 2 mit einer integrierten Aufnahme für die Strahlquelle (Fig. 3A) und einer integrierten Aufnahme für eine Strahlformungsoptik zur Formung des Laserstrahls und des Empfangsstrahls (Fig. 3B);
- Fig. 4: den monolithischen Optikträger der Fig. 2 mit einer integrierten Aufnahme für die als Polarisationsstrahlteiler ausgebildete Strahlteilungsoptik zur Trennung des Laser- und Empfangsstrahls; und
- Fig. 5: eine alternative Ausführungsform eines monolithischen Optikträgers mit einer als Lochspiegel ausgebildeten Strahlteilungsoptik, die in den Optikträger integriert ist.

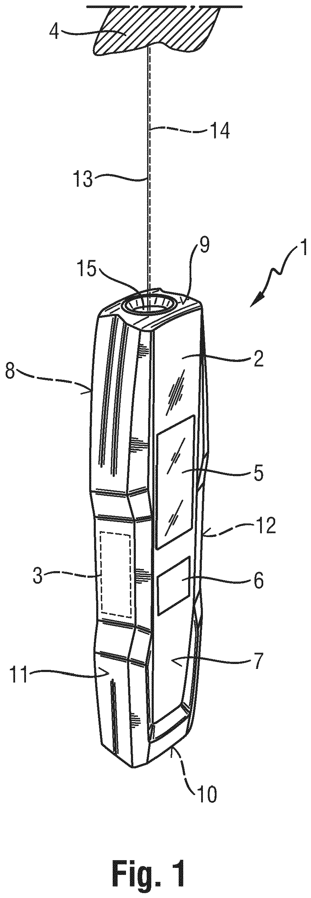

**Fig. 1** zeigt ein Laserdistanzmesssystem **1** in einer dreidimensionalen Darstellung. Das Laserdistanzmesssystem **1** umfasst ein Gehäuse **2,** eine Messeinrichtung **3,** mit der die Distanz zu einem Zielobjekt **4** messbar ist, eine Anzeigeeinrichtung **5** zur Anzeige der gemessenen Distanz und eine Bedieneinrichtung **6** zum Starten einer Distanzmessung und zum Einstellen des Laserdistanzmesssystems 1.

Die Messeinrichtung 3 ist im Inneren des Gehäuses 2 angeordnet und die Anzeige- und Bedieneinrichtungen 5, 6 sind in eine Oberseite **7** des Gehäuses 2 eingebettet. Die Oberseite 7 und die der Oberseite 7 gegenüberliegende Unterseite **8** des Gehäuses 2 bilden die größten Gehäuseflächen des Laserdistanzmesssystems 1. Die an die Oberseite 7 angrenzenden Vorder- und Hinterseiten **9, 10** sowie die Seitenflächen **11, 12** des Gehäuses 2 sind möglichst klein ausgebildet, um ein kompaktes Laserdistanzmesssystem 1 aufzubauen.

Die Messeinrichtung 3 sendet einen Laserstrahl **13** aus, der auf das Zielobjekt 4 gerichtet ist. Ein vom Zielobjekt 4 reflektierter und/oder gestreuter Empfangsstrahl **14** wird von der Messeinrichtung 3 detektiert. Die Distanz zum Zielobjekt 4 wird aus der Zeitdifferenz zwischen dem Empfangsstrahl 14 und einem aus dem Laserstrahl 13 ausgekoppelten Referenzstrahl berechnet.

Der Austritt des Laserstrahls 13 aus dem Gehäuse 2 erfolgt über eine Auskoppelöffnung **15,** die in die Vorderseite 9 des Gehäuses 2 eingebettet ist. Die optische Achse des Laserstrahls 13 ist annähernd senkrecht zur Vorderseite 9 ausgerichtet. Der vom Zielobjekt 4 kommende Empfangsstrahl 14 tritt über die Auskoppelöffnung 15 in das Laserdistanzmesssystem 1 ein. Die Distanzmessung zum Zielobjekt 4 erfolgt in Bezug auf eine am Laserdistanzmesssystem befindliche Referenzmarke. Bei dem Laserdistanzmesssystem 1 werden die Vorderseite 9 oder die Hinterseite 10 als Referenzmarken verwendet. Die Umschaltung zwischen den Referenzmarken erfolgt über eine Umschalteinrichtung.

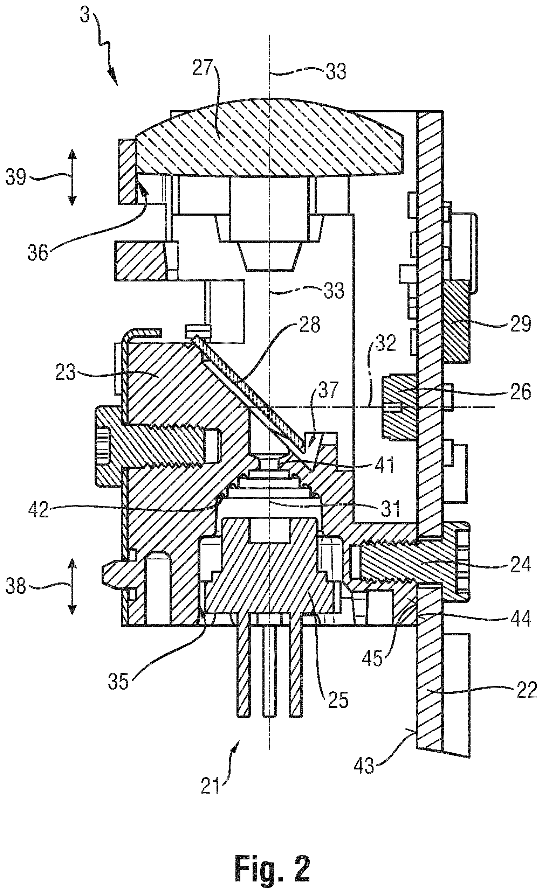

**Fig. 2** zeigt die Messeinrichtung 3, die aus einer optischen Gruppe **21** und einer Leiterplatte **22** besteht. Die optische Gruppe 21 weist einen Optikträger **23** auf, der über eine Verbindungseinrichtung **24** mit der Leiterplatte 22 verbunden ist.

Der Optikträger 23 ist als monolithischer Optikträger aus einem Material ausgebildet und ist nicht aus mehreren Einzelteilen zusammengesetzt. Monolithische Optikträger weisen keine Verbindungszone zwischen einem ersten und zweiten Verbindungspartner auf. Ein monolithischer Optikträger weist gegenüber einem mehrteiligen Optikträger den Vorteil auf, dass sich der Optikträger unter Temperatureinfluss gleichmäßig verändert, es gibt keine Bereiche im Optikträger, die sich aufgrund verschiedener Materialeigenschaften temperaturabhängig unterschiedlich verändern. Der Optikträger 23 ist aus einem metallischen Material hergestellt, beispielsweise Zink. Metallische Optikträger führen zu einer elektrischen Abschirmung zwischen den elektro-optischen Komponenten und reduzieren elektrisches Übersprechen zwischen einer Strahlquelle und einem Detektor. Zink lässt sich in Druckgussverfahren mit einer hohen Genauigkeit verarbeiten und besitzt außerdem eine hohe Temperaturstabilität, so dass Temperaturschwankungen, denen Laserdistanzmesssysteme häufig ausgesetzt sind, nur einen geringen Einfluss auf den Justagezustand und damit auf die Messeigenschaften ausüben.

Die Leiterplatte 22 ist ein Träger für elektronische und elektro-optische Bauelemente und dient der mechanischen Befestigung und elektrischen Verbindung. Leiterplatten bestehen aus elektrisch isolierendem Material, zum Beispiel faserverstärktem Kunststoff, Teflon oder Keramik, mit verbundenen Leiterbahnen. Die Bauelemente werden auf Lötflächen oder in Lötaugen gelötet und auf diese Weise gleichzeitig mechanisch gehalten und elektrisch verbunden. Größere Bauelemente können mit Kleb-oder Schraubverbindungen auf der Leiterplatte 22 befestigt werden.

Die Messeinrichtung 3 umfasst neben der Leiterplatte 22 und dem monolithischen Optikträger 23 eine als Strahlquelle ausgebildete elektro-optische Komponente **25,** eine als Detektor ausgebildete weitere elektro-optische Komponente **26,** eine Strahlformungsoptik **27,** eine Strahlteilungsoptik **28** und eine Steuer- und Auswerteeinrichtung **29.** Die Strahlquelle 25 ist als Laserdiode ausgebildet, die einen Laserstrahl im sichtbaren Spektrum, beispielsweise einen roten Laserstrahl mit einer Wellenlänge von 635 nm oder einen grünen Laserstrahl mit einer Wellenlänge von 532 nm, erzeugt. Der Detektor 26 ist als Fotodiode ausgebildet, wobei die Eigenschaften der Fotodiode 26 an die Laserdiode 25 angepasst sind. Die Steuer- und Auswerteeinrichtung 29 ist mit der Strahlquelle 25 und dem Detektor 26 verbunden und bestimmt mit Hilfe des Auswertemoduls aus einer Zeitdifferenz zwischen einem Referenzstrahl und dem vom Detektor 26 erfassten Empfangsstrahl 14 die Distanz zum Zielobjekt 4. Die Strahlformungsoptik 27 ist als Linse ausgebildet, die sowohl den ausgesandten Laserstrahl 13 als auch den reflektierten und/oder gestreuten Empfangsstrahl 14 formt.

Mit Hilfe der Strahlteilungsoptik 28 wird der von der Strahlquelle 25 kommende Laserstrahl 13 vom reflektierten und/oder gestreuten Empfangsstrahl 14 räumlich getrennt. Die Strahlteilungsoptik 28 ist im Strahlengang des Laserstrahls 13 zwischen der Strahlquelle 25 und der Strahlformungsoptik 27 und im Strahlengang des Empfangsstrahls 14 zwischen der Strahlformungsoptik 27 und dem Detektor 26 angeordnet. Die Strahlteilungsoptik 28 sorgt dafür, dass eine optische Achse **31** des ausgesandten Laserstrahls 13 und eine optische Achse **32** des auf den Detektor 26 auftreffenden Empfangsstrahls 14 voneinander verschieden sind. Eine der Strahlformungsoptik 27 zugeordnete optische Achse **33** bildet eine gemeinsame optische Achse für den Laserstrahl 13 und den Empfangsstrahl 14.

In der Ausführungsform der Fig. 2 ist die Strahlteilungsoptik 28 als Polarisationsstrahlteiler ausgebildet, der für Strahlung mit der Polarisationsrichtung des ausgesandten Laserstrahls 13 überwiegend transmittierend und für unpolarisierte Strahlung teil-reflektierend ausgebildet ist. Am Zielobjekt 4 reflektierte Strahlung (reflektierter Anteil des Empfangsstrahls) weist eine hohe Intensität auf und besitzt die gleiche Polarisationsrichtung wie der ausgesandte Laserstrahl 13, am Zielobjekt 4 gestreute Strahlung (gestreuter Anteil des Empfangsstrahls) ist unpolarisiert. Der Transmissionsgrad für polarisierte Strahlung ist beispielsweise größer als ca. 80 % und der Reflexionsgrad für polarisierte Strahlung kleiner als ca. 20 %; der Reflexionsgrad für unpolarisierte Strahlung beträgt ca. 50 %. Je größer der transmittierte Anteil des Laserstrahls an der Strahlteilungsoptik 28 ist, umso besser ist die Sichtbarkeit des Laserstrahls am Zielobjekt 4. Dadurch, dass der Reflexionsgrad für polarisierte Strahlung kleiner als ca. 20 % ist, wird die reflektierte Strahlung stark gedämpft und ein Übersteuern des Detektors 26 verhindert.

Der Optikträger 23 weist eine erste Aufnahme **35** für die Strahlquelle 25, eine zweite Aufnahme **36** für die Strahlformungsoptik 27 und eine dritte Aufnahme **37** für die Strahlteilungsoptik 28 auf. Die Strahlquelle 25 und die Strahlformungsoptik 27 sind in ihren Aufnahmen 35, 36 zumindest während der Justierung der Messeinrichtung 3 jeweils in einer Hin- und/oder Rückrichtung **38, 39** parallel zu den zugeordneten optischen Achsen 31, 33 verstellbar, wobei die Hin- und/oder Rückrichtungen 38, 39 auch als Verstellrichtungen bezeichnet werden.

In der Ausführung der Fig. 2 sind die optischen Achse 31 der Strahlquelle 25 und die optische Achse 33 der Strahlformungsoptik 27 parallel angeordnet. Alternativ können die optischen Achsen der Strahlquelle 25 und der Strahlformungsoptik 27 unter einem Winkel, beispielsweise senkrecht zueinander, angeordnet sein. In diesem Fall wären die Verstellrichtungen, in die die Strahlquelle 25 und die Strahlformungsoptik 27 verstellbar ausgebildet sind, voneinander verschieden. Über die optischen Eigenschaften der Strahlteilungsoptik 28 wird eingestellt, welcher Anteil eines auftreffenden Laser- und/oder Empfangsstrahls reflektiert und/oder transmittiert wird.

Im Strahlengang des Laserstrahls 13 ist zwischen der Strahlquelle 25 und der Strahlteilungsoptik 28 eine Blende **41** angeordnet, die in den monolithischen Optikträger 23 integriert ist. Die Blende 41 dient dazu, den Öffnungswinkel bzw. die numerische Apertur der Strahlquelle 25 zu begrenzen und die Geometrie des Laserstrahls 13 an die Strahlteilungsoptik 28 und Strahlformungsoptik 27 anzupassen. Zwischen der Strahlquelle 25 und der Blende 41 ist eine Lichtfalle **42** angeordnet, die wie die Blende 41 in den monolithischen Optikträger 23 integriert ist. Die Lichtfalle 42 dient dazu, auftreffendes Licht zu absorbieren und unerwünschte Reflektionen zu verhindern. Dazu ist die Lichtfalle 42 auf der Innenseite mit einer reflexarmen, absorbierenden Beschichtung versehen. Durch die Blende 41 und die Lichtfalle 42 werden optisches und elektrisches Übersprechen von der Strahlquelle 25 zum Detektor 26 reduziert.

Der Detektor 26 ist auf einer dem Optikträger 23 zugewandten Vorderseite **43** der Leiterplatte 22 angeordnet und mit der Leiterplatte 22 stoffschlüssig über eine Lötverbindung verbunden, der Detektor 26 kann beispielsweise bei der Herstellung der Leiterplatte 22 automatisch bestückt und mit der Leiterplatte 22 verlötet werden. Der Detektor 26 ist ausschließlich mit der Leiterplatte 22 verbunden und mechanisch gehalten, es sind keine Verbindungsmittel vorhanden, die den Detektor 26 unmittelbar mit dem Optikträger 23 verbinden. Der Optikträger 23 ist an der dem Detektor 26 im verbauten Zustand zugewandten Seite zumindest im Bereich des Detektors 26 offen ausgebildet und mit einer ersten Kontaktfläche **44** über die Verbindungseinrichtung 24 mit einer zweiten Kontaktfläche **45** der Leiterplatte 22 verbunden. Die Verbindungseinrichtung 24 zwischen der Leiterplatte 22 und dem Optikträger 23 ist zumindest während der Justierung des Detektors 26 lösbar ausgebildet.

Die Justierung der Messeinrichtung 3 erfolgt mit Hilfe eines optischen Instrumentes, das eine Linse und einen digitalen Kamerachip, der in der Fokusebene der Linse angeordnet ist, umfasst. Das optische Instrument ist auf eine gewünschte Gegenstandsweite eingestellt, wobei die Gegenstandsweite als eine endliche Entfernung, beispielsweise 10 m, oder eine unendliche Entfernung eingestellt sein kann. Die Messeinrichtung 3 wird so vor der Linse angeordnet, dass die Linse den von der Strahlformungsoptik 27 geformten Laserstrahl und eine Abbildung der aktiven Fläche des Detektors 26 erfasst und auf dem Kamerachip abbildet. Auf dem Kamerachip sind sowohl der Laserstahl als auch die Abbildung der aktiven Fläche des Detektors 22 gleichzeitig dargestellt.

Die Justierung der Messeinrichtung 3 erfolgt in zwei Abschnitten: In einem ersten Abschnitt werden die elektro-optischen bzw. optischen Komponenten 25, 27, 28 im Optikträger 23 in ihrer jeweiligen Verstellrichtung 38, 39 justiert und nach der Justierung des Optikträgers 23 wird der Detektor 26 in einem zweiten Abschnitt in einer Ebene senkrecht zur zugeordneten optischen Achse 32 justiert. Die erste und zweite Aufnahme 35, 36 im Optikträger 23 sind so ausgebildet, dass die elektro-optische Komponente 25 und die Strahlformungsoptik 27 im Wesentlichen nur in ihrer Verstellrichtung 38, 39 verstellbar sind, eine Verstellung in einer Ebene senkrecht zu den optischen Achsen 31, 33 ist nicht möglich.

Im ersten Abschnitt wird zunächst die Strahlteilungsoptik 28 in die dritte Aufnahme 37 eingesetzt und von einem Federelement fixiert bzw. geklemmt. Anschließend werden die Strahlquelle 25 und die Strahlformungsoptik 27 in ihre Aufnahmen 35, 36 eingesetzt. Um die Strahlformungsoptik 27 und die Strahlquelle 25 zu justieren, wird die zweite Kontaktfläche 45 der Leiterplatte 22 auf Anschlag mit der ersten Kontaktfläche 44 des Optikträgers 23 gebracht und mittels der Verbindungseinrichtung 24 lösbar mit dem Optikträger 23 verbunden.

Die Strahlformungsoptik 27 wird in ihrer Verstellrichtung 39 verschoben, bis das optische Instrument, das auf die gewünschte Gegenstandsweite eingestellt ist, durch die Strahlformungsoptik 27 ein scharfes Bild der aktiven Fläche des Detektors 26 detektiert, wobei das Bild bei einem hohen Kontrast scharf ist. Im Fall maximaler Bildschärfe ist die Strahlformungsoptik 27 im Bezug zur aktiven Fläche des Detektors 26 auf die gewünschte Entfernung, die der Gegenstandsweite des optischen Instrumentes entspricht, justiert. Die zweite Aufnahme 36 für die Strahlformungsoptik 27 ist beispielsweise als Presspassung ausgebildet und die Strahlformungsoptik 27 ist durch die Klemmkraft der Presspassung 36 fixiert; die Verschiebung der Strahlformungsoptik 27 in der Verstellrichtung 39 erfolgt unter genügend hohem Druck gegen die Klemmkraft der Presspassung 36. Alternativ oder zusätzlich zur Presspassung kann die Strahlformungsoptik 27 stoffschlüssig, beispielsweise mittels einer Klebverbindung, mit dem Optikträger 23 verbunden werden.

Nach der Strahlformungsoptik 27 wird die Strahlquelle 25 justiert. Die Strahlquelle 25 sendet einen Laserstrahl aus, der mit Hilfe des optischen Instrumentes überwacht wird. Die Strahlquelle 25 wird in ihrer Verstellrichtung 38 verschoben, bis das optische Instrument durch die Strahlformungsoptik 27 einen minimalen Fokuspunkt des Laserstrahls detektiert. In diesem Fall befindet sich die Strahltaille des Laserstrahls in der gewünschten Entfernung. Die erste Aufnahme 35 für die Strahlquelle 25 ist beispielsweise als Presspassung ausgebildet und die Strahlquelle 25 ist durch die Klemmkraft der Presspassung 35 fixiert; die Verschiebung der Strahlquelle 25 in der Verstellrichtung 38 erfolgt unter genügend hohem Druck gegen die Klemmkraft der Presspassung 35. Alternativ oder zusätzlich zur Presspassung kann die Strahlquelle 25 stoffschlüssig, beispielsweise mittels einer Klebverbindung, mit dem Optikträger 23 verbunden werden.

Nach der Justierung der elektro-optischen und optischen Komponenten 25, 27, 28 im Optikträger 23 wird der Detektor 26 justiert. Da der Detektor 26 stoffschlüssig über eine Lötverbindung mit der Leiterplatte 22 verbunden ist, erfolgt die Justierung des Detektors 26 relativ zum Optikträger 23 über die Leiterplatte 22. Dazu wird die Verbindungseinrichtung 24, die zumindest während der Justierung der Messeinrichtung 3 lösbar ausgebildet ist, zwischen dem Optikträger 23 und der Leiterplatte 22 gelöst. Die Strahlquelle 25 wird eingeschaltet und sendet einen Laserstrahl aus, der zusammen mit dem Bild der aktiven Fläche des Detektors 26 vom optischen Instrument erfasst wird. Der Laserstrahl bildet auf dem Kamerachip einen Fokuspunkt und die aktive Fläche des Detektors 26 bildet ein scharfes Bild, das dem Fokuspunkt des Laserstrahls überlagert ist. Die Leiterplatte 22 wird in der Ebene, die senkrecht zur optischen Achse 32 des Empfangsstrahls ausgerichtet ist, verschoben, bis sich der Fokuspunkt des Laserstrahls auf dem Kamerachip in einem bestimmten Bereich der aktiven Fläche des Detektors 26 befindet. Dabei entspricht die Position des Fokuspunktes des Laserstrahls der Position eines auf den Detektor 26 fokussierten Empfangsstrahls, der von einem in der Gegenstandsweite des optischen Instrumentes angeordneten Zielobjekt gestreut wurde. Während der Justierung des Detektors 26 in der Ebene senkrecht zur optischen Achse 32 steht die Leiterplatte 22 über die zweite Kontaktfläche 45 mit der ersten Kontaktfläche 44 des Optikträgers 25 in Kontakt. Die erste Kontaktfläche 44 agiert als Anschlagfläche für die Leiterplatte 22 in Richtung der optischen Achse 32. Durch die Anschlagfläche 44 wird sichergestellt, dass die Position des Detektors 26 in Richtung der optischen Achse 32 während der Justierung des Detektors 26 konstant ist bzw. nicht verändert wird.

Abschließend wird die Leiterplatte 22 in der justierten Position mit dem Optikträger 23 verbunden. Dabei erfolgt die Verbindung in zwei Schritten: In einem ersten Schritt wird die Leiterplatte 22 kraftfrei über eine Klebverbindung mit dem Optikträger 23 verbunden. In einem zweiten Schritt wird die Leiterplatte 22 zusätzlich über eine Schraubverbindung mit dem Optikträger 23 verbunden. Auf diese Weise können die Vorteile von Kleb-und Schraubverbindungen genutzt werden. Bei einer Klebverbindung wird die Kraft flächig vom einen zum anderen Verbindungspartner übertragen; eine Klebverbindung erfordert keine Veränderung der Verbindungspartner und kann in vielen Fällen ohne Beschädigung der Verbindungspartner rückgängig gemacht werden. Die Klebverbindung kann sich allerdings unter Temperatureinwirkung verändern, bei tiefen Temperaturen kann es zu einer Versprödung und bei hohen Temperaturen zu einer Erweichung der Klebverbindung kommen. Bei einer Schraubverbindung entstehen Spannungsspitzen an den Verbindungspartnern, während der Raum dazwischen kaum zur Kraftübertragung beiträgt. Allerdings unterliegen Schraubverbindungen nur einem geringen Temperatureinfluss und erzeugen außerdem eine elektrische Verbindung zwischen dem Optikträger und der Leiterplatte.

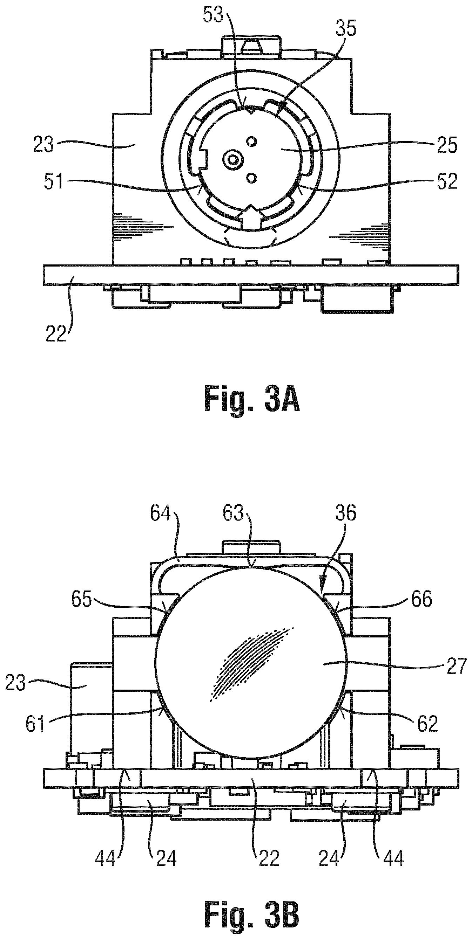

**Fig. 3A** zeigt den monolithischen Optikträger 23 in einer Ansicht auf die Strahlquelle 25, die in die erste Aufnahme 35 des Optikträgers 23 eingesetzt ist. Die Strahlquelle 25 kann zur Justierung in der ersten Aufnahme 35 in der Verstellrichtung 38 verschoben werden.

Die erste Aufnahme 35 zur Befestigung der Strahlquelle 25 am Optikträger 23 ist als Dreipunktauflage mit drei Auflagebereichen **51, 52, 53** ausgebildet. Die drei Auflagebereiche 51, 52, 53 sind in den Optikträger 23 integriert und als Klemmelemente ausgebildet. Um eine möglichst gleichmäßige Krafteinleitung in die Strahlquelle 25 zu erzielen, sind die Auflagebereiche 51, 52, 53 symmetrisch um die Strahlquelle 25 herum angeordnet.

**Fig. 3B** zeigt den monolithischen Optikträger 23 in einer Ansicht auf die Strahlformungsoptik 27, die in die zweite Aufnahme 36 des monolithischen Optikträgers 23 eingesetzt ist. Die Strahlformungsoptik 27 kann zur Justierung in der zweiten Aufnahme 36 in der Verstellrichtung 39 verschoben werden.

Die zweite Aufnahme 36 zur Befestigung der Strahlformungsoptik 27 am Optikträger 23 ist wie die erste Aufnahme 35 für die Strahlquelle 25 als Dreipunktauflage mit drei Auflagebereichen, die in den monolithischen Optikträger 23 integriert sind, ausgebildet. Als einen ersten und zweiten Auflagebereich weist die Aufnahme 36 jeweils eine Auflagefläche **61, 62** auf. Ein dritter Auflagepunkt ist als Klemmfläche **63** in einem Federelement **64** ausgebildet. Das Federelement 64 drückt die Strahlformungsoptik 27 in die Auflageflächen 61, 62 und ist ebenfalls in den monolithischen Optikträger 23 integriert. Um eine möglichst gleichmäßige Krafteinleitung zu erzielen und eine Wölbung der Strahlformungsoptik 27 zu verhindern, sind die Auflagebereiche 61, 62, 63 symmetrisch um die Strahlformungsoptik 27 herum angeordnet.

Der Optikträger 23 weist neben den beiden Auflageflächen 61, 62 weitere Führungsflächen **65, 66** auf, die in den monolithischen Optikträger 23 integriert sind. Die Führungsflächen 65, 66 dienen dazu, die Strahlformungsoptik 27 beim Einsetzen in die zweite Aufnahme 36 und beim Justieren der Strahlformungsoptik 27 entlang der Verstellrichtung 39 zu führen.

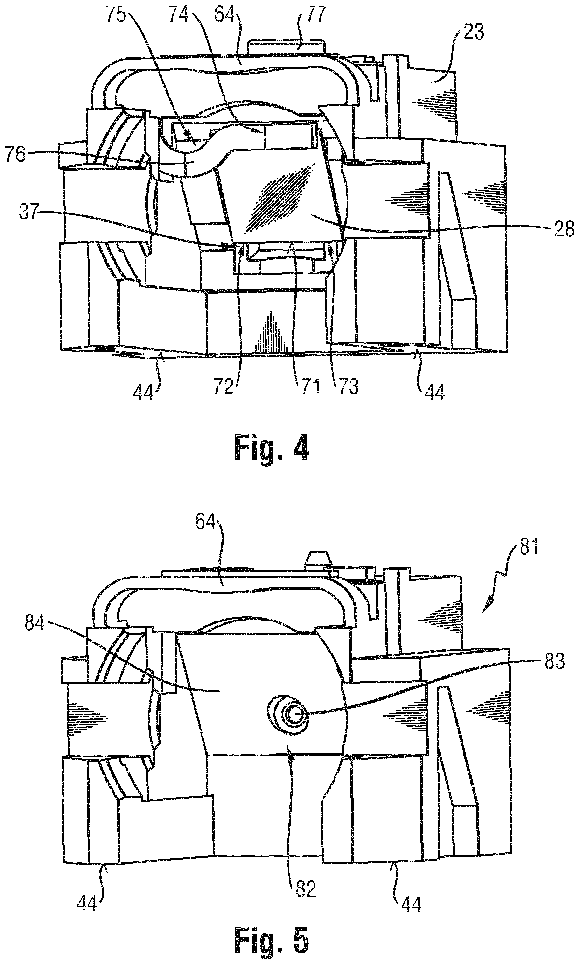

**Fig. 4** zeigt den monolithischen Optikträger 23 der Fig. 2 in einer dreidimensionalen Ansicht auf die Strahlteilungsoptik 28, die in der dritten Aufnahme 37 angeordnet ist.

Die Strahlteilungsoptik 28 weist eine plan ausgebildete Unterseite auf, die auf einer in den monolithischen Optikträger 23 integrierten Auflagefläche **71** gelagert ist. Die Auflagefläche 71 für die Strahlteilungsoptik 28 ist als Dreipunktauflage mit drei Auflagebereichen, die in den monolithischen Optikträger 23 integriert sind, ausgebildet. Als einen ersten und zweiten Auflagebereich **72, 73** weist die Auflagefläche 71 jeweils eine keilförmige Nut auf. Beide Auflagebereiche 72, 73 befinden sich am Rand der planen Unterseite der Strahlteilungsoptik 28. Ein dritter Auflagebereich **74** ist in der Auflageebene gegenüber den beiden keilförmigen Nuten 72, 73 angeordnet und befindet sich ebenfalls am Rand der planen Unterseite der Strahlteilungsoptik 28. Durch die Anordnung der drei Auflagebereiche 72, 73, 74 auf der planen Unterseite der Strahlteilungsoptik 28 ist gewährleistet, dass Bewegungen oder eine thermische Ausdehnung nicht zu einer Verkippung oder Wölbung der Strahlteilungsoptik 28 führen.

Die Strahlteilungsoptik 28 ist mit Hilfe einer Befestigungseinrichtung **75** relativ zur Auflagefläche 71 des Optikträgers 23 fixiert. Die Befestigungseinrichtung 75 umfasst ein Federelement **76,** das über ein Verbindungsmittel **77** am Optikträger 23 befestigt ist, das Federelement 76 ist beispielsweise über eine Schraubverbindung am Optikträger 23 befestigt. Die Strahlteilungsoptik 28 wird einerseits mit dem Federelement 76 auf den dritten Auflagebereich 74 fixiert, und andererseits wird es in den beiden als Auflagebereichen ausgebildeten keilförmigen Nuten 72, 73 fixiert. Dabei wirkt die Federkraft möglichst über dem dritten Auflagebereich 74. Durch die Auflage in den beiden Nuten 72, 73 wird gewährleistet, dass die jeweiligen Andruckkräfte und die Auflagegegenkräfte weitgehend gegensinnig auf die Strahlteilungsoptik 28 wirken und eine Wölbung der Strahlteilungsoptik 28 vermieden wird.

**Fig. 5** zeigt eine alternative Ausführung eines monolithischen Optikträgers **81** mit einer Strahlteilungsoptik **82,** die als Lochspiegel ausgebildet und in den Optikträger 81 integriert ist. Der Lochspiegel 82 ist im Strahlengang des Laserstrahls 13 zwischen der Strahlquelle 25 und der Strahlformungsoptik 27 und im Strahlengang des Empfangsstrahls 14 zwischen der Strahlformungsoptik 27 und dem Detektor 26 angeordnet.

Der Lochspiegel 82 umfasst eine Öffnung **83,** durch die der Laserstrahl 13 hindurch tritt. Der Durchmesser der Öffnung 83 ist an die Größe des Laserstrahls 13 angepasst. Ein Teil des Laserstrahls trifft auf den Randbereich der Öffnung 83 und wird als Referenzstrahl in Richtung des Detektors 22 abgelenkt. Die Öffnung 83 ist von einer Beschichtung **84** umgeben, die für den Empfangsstrahl 14 zumindest teil-reflektierend ausgebildet ist. Der Reflexionsgrad der Beschichtung 84 beträgt z.B. mehr als 90 %. Reflektierte Anteile im Empfangsstahl 14, die an spiegelnden Oberflächen des Zielobjektes 4 reflektiert werden, besitzen im Vergleich zu den gestreuten Anteilen eine sehr hohe Intensität. Die reflektierten Anteile besitzen eine ähnliche Strahlform wie der Laserstrahl 13 und werden von der Strahlformungsoptik 27 im Wesentlichen durch die Öffnung 83 hindurch auf die Strahlquelle 25 abgebildet und somit größtenteils nicht auf den Detektor 26 reflektiert. Hierdurch werden reflektierte Anteile im Empfangsstrahl 14 stark gedämpft und somit ein Übersteuern des Detektors 26 verhindert.

Die Öffnung 83 des Lochspiegels 82 kann außerdem als Blende für den Laserstrahl 13 wirken und den Öffnungswinkel bzw. die numerische Apertur der Strahlquelle 25 begrenzen und die Geometrie des Laserstrahls 13 an die Strahlteilungsoptik 82 und die Strahlformungsoptik 27 anpassen. Zwischen der Strahlquelle 25 und der Öffnung 83 kann eine Lichtfalle in den Optikträger 81 integriert sein. Durch die Öffnung 83 und die Lichtfalle wird optisches und elektrisches Übersprechen von der Strahlquelle 25 zum Detektor 26 reduziert.

Die Öffnung 83 kann alternativ als optisch transparentes Medium mit einem Brechungsindex, der von Luft verschieden ist, ausgebildet sein. Als optisch transparentes Medium ist beispielsweise Glas oder Kunststoff geeignet. Ein kleiner Teil, beispielsweise 4 %, des Laserstrahls 13 wird an dem transparenten Medium 83 reflektiert und erreicht als Referenzstrahl direkt den Detektor 26. Der größere Teil des Laserstrahls, beispielsweise 96 %, tritt durch die Öffnung 83 hindurch.

## Patentansprüche

1. Messeinrichtung (3) zur Messung einer Distanz zwischen einer Referenzmarke (9, 10) und einem Zielobjekt (4) bestehend aus
einer Strahlquelle (25), die als elektro-optische Komponente ausgebildet ist und einen Laserstrahl (13) entlang einer optischen Achse (31) aussendet,
einem Detektor (26), der als weitere elektro-optische Komponente ausgebildet ist und einen vom Zielobjekt (4) reflektierten und/oder gestreuten Empfangsstrahl (14) entlang einer optischen Achse (32) empfängt,
einer Strahlformungsoptik (27), die den Laserstrahl (13) und den Empfangsstrahl (14) entlang einer optischen Achse (33) formt, einer Strahlteilungsoptik (28; 82), die den Laserstrahl (13) oder den Empfangsstrahl (14) umlenkt, und einem Optikträger (23; 81) mit einer ersten Aufnahme (35) zur Befestigung einer ersten der elektro-optischen Komponenten (25; 26) und einer zweiten Aufnahme (36) zur Befestigung der Strahlformungsoptik (27), wobei der Optikträger (23; 81) mit der ersten Aufnahme (35) zur Befestigung einer ersten der elektro-optischen Komponenten (25; 26) und der zweiten Aufnahme (36) zur Befestigung der Strahlformungsoptik (27) monolithisch ausgebildet ist, **dadurch gekennzeichnet, dass**
die erste der elektro-optischen Komponenten (25; 26) und die Strahlformungsoptik (27) zumindest während der Justierung der Messeinrichtung (1) in ihren Aufnahmen (35, 36) ausschließlich in Richtung der zugeordneten optischen Achsen (31, 32) verstellbar sind.

2. Messeinrichtung nach Anspruch 1, **dadurch gekennzeichnet, dass** die zweite Aufnahme (36) zur Befestigung der Strahlformungsoptik (27) eine erste Auflagefläche (61), eine zweite Auflagefläche (62) und eine Klemmfläche (63) aufweist, wobei die Auflage- und Klemmflächen (61, 62, 63) in den Optikträger (23; 81) integriert sind.

3. Messeinrichtung nach Anspruch 2, **dadurch gekennzeichnet, dass** der Optikträger (23; 81) ein Federelement (64) aufweist, das die Klemmfläche (63) bildet.

4. Messeinrichtung nach einem der Ansprüche 2 bis 3, **dadurch gekennzeichnet, dass** die zweite Aufnahme (36) mindestens eine zusätzliche Führungsfläche (65, 66) aufweist, die in den Optikträger (23; 81) integriert ist.

5. Messeinrichtung nach einem der Ansprüche 1 bis 4, **dadurch gekennzeichnet, dass** der Optikträger (23) eine dritte Aufnahme (37) zur Befestigung der Strahlteilungsoptik (28) mit drei Auflagebereichen (72, 73, 74) aufweist, wobei die drei Auflagebereiche (72, 73, 74) in den Optikträger (23) integriert sind.

6. Messeinrichtung nach Anspruch 5, **dadurch gekennzeichnet, dass** ein erster und zweiter Auflagebereich (72, 73) der drei Auflagebereiche (72, 73, 74) als keilförmige Nuten und ein dritter Auflagebereich (74) der drei Auflagebereiche (72, 73, 74) als ebene Auflagefläche ausgebildet sind und die Strahlteilungsoptik (28) mit Hilfe eines Klemmelementes (76) am dritten Auflagebereich (74) geklemmt ist.

7. Messeinrichtung nach einem der Ansprüche 1 bis 4, **dadurch gekennzeichnet, dass** die Strahlteilungsoptik als Lochspiegel (82) bestehend aus einer Öffnung (83) und einer reflektierenden Beschichtung (84) ausgebildet ist, wobei die Öffnung (83) in den Optikträger (23) integriert ist und die reflektierende Beschichtung (84) die Öffnung (83) umgibt.

8. Messeinrichtung nach einem der Ansprüche 1 bis 7, **dadurch gekennzeichnet, dass** im Strahlengang des Laserstrahls (13) zwischen der Strahlquelle (25) und der Strahlteilungsoptik (28; 82) eine Blende (41; 83) angeordnet ist, wobei die Blende (41; 83) in den Optikträger (23; 81) integriert ist.

9. Messeinrichtung nach einem der Ansprüche 1 bis 8, **dadurch gekennzeichnet, dass** im Strahlengang des Laserstrahls (13) zwischen der Strahlquelle (25) und der Strahlteilungsoptik (28) eine Lichtfalle (42) angeordnet ist, wobei die Lichtfalle (42) in den Optikträger (23) integriert ist.

10. Messeinrichtung nach einem der Ansprüche 1 bis 9, **dadurch gekennzeichnet, dass** der Optikträger (23; 81) aus einem metallischen Material ausgebildet ist.

11. Messeinrichtung nach einem der Ansprüche 1 bis 10, **dadurch gekennzeichnet, dass** der Optikträger (23; 81) als Druckgussteil ausgebildet ist.

12. Messeinrichtung nach Anspruch 11, **dadurch gekennzeichnet, dass** der Optikträger (23; 81) als Druckgussteil aus Zink oder einer Zinklegierung ausgebildet ist.

## Claims

1. Measuring device (3) for measuring a distance between a reference mark (9, 10) and a target object (4), consisting of
a beam source (25) designed as an electro-optical component and emitting a laser beam (13) along an optical axis (31),
a detector (26) designed as a further electro-optical component and receiving a beam (14) reflected and/or scattered by the target object (4) along an optical axis (32),
a beam-forming lens system (27) forming the laser beam (13) and the received beam (14) along an optical axis (33),
a beam-splitting lens system (28; 82) deflecting the laser beam (13) or the received beam (14) and
a lens system carrier (23; 81) with a first receptacle (35) for mounting the first of the electro-optical components (25; 26) and a second receptacle (36) for mounting the beam-forming lens system (27), wherein
the lens system carrier (23; 81) with the first receptacle (35) for mounting the first of the electro-optical components (25; 26) and the second receptacle (36) for mounting the beam-forming lens system (27) has a monolithic design, **characterised in that**
the first of the electro-optical components (25; 26) and the beam-forming lens system (27) are adjustable in their receptacles (35, 36) exclusively in the direction of the associated optical axes (31, 32) at least during the adjustment of the measuring device (1).

2. Measuring device according to claim 1, **characterised in that** the second receptacle (36) for mounting the beam-forming lens system (27) has a first supporting surface (61), a second supporting surface (62) and a clamping surface (63), wherein the supporting and clamping surfaces (61, 62, 63) are integrated into the lens system carrier (23; 81).

3. Measuring device according to claim 2, **characterised in that** the lens system carrier (23; 81) has a spring element (64) that forms the clamping surface (63).

4. Measuring device according to one of claims 2 to 3, **characterised in that** the second receptacle (36) has at least one additional guide surface (65, 66) integrated into the lens system carrier (23; 81).

5. Measuring device according to one of claims 1 to 4, **characterised in that** the lens system carrier (23) has a third receptacle (37) for mounting the beam-splitting lens system (28) with three supporting regions (72, 73, 74), wherein the three supporting regions (72, 73, 74) are integrated into the lens system carrier (23).

6. Measuring device according to claim 5, **characterised in that** first and second supporting regions (72, 73) of the three supporting regions (72, 73, 74) are designed as wedge-shaped grooves and a third supporting region (74) of the three supporting regions (72, 73, 74) is designed as a flat supporting surface and the beam-splitting lens system (28) is clamped to the third supporting region (74) with the aid of a clamping element (76).

7. Measuring device according to one of claims 1 to 4, **characterised in that** the beam-splitting lens system is designed as a pinhole mirror (82) consisting of an aperture (83) and a reflective coating (84), wherein the aperture (83) is integrated into the lens system carrier (23) and the reflective coating (84) surrounds the aperture (83).

8. Measuring device according to one of claims 1 to 7, **characterised in that** a diaphragm (41; 83) is arranged in the beam path of the laser beam (13) between the beam source (25) and the beam-splitting lens system (28; 82), wherein the diaphragm (41; 83) is integrated into the lens system carrier (23; 81).

9. Measuring device according to one of claims 1 to 8, **characterised in that** a light trap (42) is arranged in the beam path of the laser beam (13) between the beam source (25) and the beam-splitting lens system (28), wherein the light trap (42) is integrated into the lens system carrier (23).

10. Measuring device according to one of claims 1 to 9, **characterised in that** the lens system carrier (23; 81) is made of a metallic material.

11. Measuring device according to one of claims 1 to 10, **characterised in that** the lens system carrier (23; 81) is designed as a pressure die-cast part.

12. Measuring device according to claim 11, **characterised in that** the lens system carrier (23; 81) is designed as a pressure die-cast part made of zinc or a zinc alloy.

## Revendications

1. Dispositif de mesure (3) pour mesurer une distance entre une marque de référence (9, 10) et un objet cible (4), constitué de :
une source de faisceau (25) configurée comme un composant électro-optique et émettant un faisceau laser (13) le long d'un axe optique (31),
un détecteur (26) configuré comme un autre composant électro-optique et recevant un faisceau de réception (14) réfléchi et/ou dispersé par l'objet cible (4) le long d'un axe optique (32),
une optique de mise en forme de faisceau (27) formant le faisceau laser (13) et le faisceau de réception (14) le long d'un axe optique (33),
une optique de séparation de faisceau (28 ; 82) déviant le faisceau laser (13) ou le faisceau de réception (14), et
un support optique (23 ; 81) ayant un premier logement (35) pour fixer un premier des composants électro-optiques (25 ; 26) et un deuxième logement (36) pour fixer l'optique de mise en forme de faisceau (27), dans lequel le support optique (23 ; 81) avec le premier logement (35) pour fixer un premier composant électro-optique (25 ; 26) et le deuxième logement (26) pour fixer l'optique de mise en forme de faisceau (26) est formé de manière monolithique,
**caractérisé en ce que**
le premier des composants électro-optiques (25 ; 26) et l'optique de mise en forme de faisceau (27) sont réglables au moins pendant le réglage du dispositif de mesure (3) dans leurs logements (35, 36) exclusivement en direction des axes optique (31, 32) associés.

2. Dispositif de mesure selon la revendication 1, **caractérisé en ce que** le deuxième logement (36) pour fixer l'optique de mise en forme de faisceau (27) comporte une première surface de support (61), une seconde surface de support (62) et une surface de serrage (63), dans lequel les surfaces de support et de serrage (61, 62, 63) sont intégrées dans les supports optiques (23 ; 81) .

3. Dispositif de mesure selon la revendication 2, **caractérisé en ce que** le support optique (23 ; 81) comporte un élément de ressort (64) qui forme la surface de serrage (63).

4. Dispositif de mesure selon l'une des revendications 2 à 3, **caractérisé en ce que** le deuxième logement (36) comporte au moins une surface de guidage supplémentaire (65, 66) qui est intégrée dans le support optique (23 ; 81).

5. Dispositif de mesure selon l'une des revendications 1 à 4, **caractérisé en ce que** le support optique (23) comporte un troisième logement (37) pour fixer l'optique de séparation de faisceau (28) avec trois zones de support (72, 73, 74), dans lequel les trois zones de support (72, 73, 74) sont intégrées dans le support optique (23).

6. Dispositif de mesure selon la revendication 5, **caractérisé en ce qu'**une première et une deuxième zone de support (72, 73) des trois zones de support (72, 73, 74) sont formées comme des rainures en forme de clavette et une troisième zone de support (74) des trois zones de support (72, 73, 74) est formée comme une surface de support plane, et l'optique de séparation de faisceau (28) est serrée sur la troisième zone de support (74) à l'aide d'un élément de serrage (76).

7. Dispositif de mesure selon l'une des revendications 1 à 4, **caractérisé en ce que** l'optique de séparation de faisceau est formée comme un miroir à trou d'épingle (82) constitué d'une ouverture (83) et d'un revêtement réfléchissant (84), dans lequel l'ouverture (83) est intégrée dans le support optique (23) et le revête**ment réfléchissant (84) entoure l'ouverture (83).**

8. Dispositif de mesure selon l'une des revendications 1 à 7, **caractérisé en ce qu'**un diaphragme (41 ; 83) est agencé dans le trajet du faisceau laser (13) entre la source de faisceau (25) et l'optique de séparation de faisceau (28 ; 82), le diaphragme (41 ; 83) étant intégré dans le support optique (23 ; 81).

9. Dispositif de mesure selon l'une des revendications 1 à 8, **caractérisé en ce qu'**un piège de lumière (42) est agencé dans le trajet du faisceau laser (13) entre la source de faisceau (25) et l'optique de séparation de faisceau (28), le piège de lumière (42) étant intégré dans le support optique (23).

10. Dispositif de mesure selon l'une des revendications 1 à 9, **caractérisé en ce que** le support optique (23 ; 81) est formé à partir d'un matériau métallique.

11. Dispositif de mesure selon l'une des revendications 1 à 10, **caractérisé en ce que** le support optique (23 ; 81) est formé comme une pièce moulée sous pression.

12. Dispositif de mesure selon la revendication 11, **caractérisé en ce que** le support optique (23 ; 81) est formé comme une pièce moulée sous pression en zinc ou en alliage de zinc.
